# EUROPÄISCHE PATENTSCHRIFT

(11) **EP 4 062 736 B1**
(45) Veröffentlichungstag und Bekanntmachung des Hinweises auf die Patenterteilung: **12.08.2026**
(21) Anmeldenummer: 22163621.0
(22) Anmeldetag: 22.03.2022
(51) Int. Cl.: A01C 15/00, A01C 15/18, A01C 9/08, A01C 7/06, A01C 7/12, A01C 7/16, A01C 19/02

(54) **LANDWIRTSCHAFTLICHE STREUVORRICHTUNG**
AGRICULTURAL SPREADING DEVICE
DISPOSITIF D'ÉPANDAGE AGRICOLE

(30) Priorität: 22.03.2021 DE 202021101470 U
(43) Veröffentlichungstag der Anmeldung: 28.09.2022
(73) Patentinhaber: Grimme Landmaschinenfabrik SE & Co. KG, 49104 Damme (DE)
(72) Erfinder: Rechtien, Jochen, 49088 D Osnabrück (DE); Hohnhorst, Johannes, D-49401 Damme (DE); Ehrenborg, Jan, D-49439 Steinfeld (DE)
(74) Vertreter: Wischmeyer, André

(56) Entgegenhaltungen:
- GB-A- 568 026
- US-A- 2 947 544
- US-A1- 2012 174 844
- US-A1- 2015 041 572

## Beschreibung

Die vorliegende Erfindung betrifft eine landwirtschaftliche Streuvorrichtung für Dünger oder anderes in oder auf einen zu bearbeitenden Untergrund zu überführendes Gut, umfassend wenigstens einen Vorratsbehälter für das Gut sowie eine Abgabeeinheit, die eine zumindest teilweise durch den Vorratsbehälter verlaufende Rührwelle und wenigstens eine in einem Dosiergehäuse angeordnete Dosierwelle umfasst, mittels der das Gut in Richtung eines Abgabebereiches der Abgabeeinheit förderbar ist, wobei eine eine Antriebseinheit aufweisende Antriebsvorrichtung der Abgabeeinheit zum Antrieb der Dosierwelle insbesondere über die Rührwelle ausgebildet ist.

Eine in der EP 0 459 175 A1 gezeigte Dosierwelle ist im Vorratsbehälter gelagert, weswegen die Wartung der Dosierwelle aufwendig ist.

In der US 2012/174844 A1 ist eine Saatgutdosierung offenbart, die einen Vorratsbehälter mit einer hierdrin verlaufenden Rührwelle sowie eine in einem Dosiergehäuse angeordnete Dosierwelle umfasst. Die Dosierwelle ist über abnehmbare Gehäuseteile des Dosiergehäuses gelagert.

Die US 2,947,544 A offenbart eine Streuvorrichtung für Dünger mit einer Vielzahl von Transportwellen unterhalb eines Vorratsbehälters.

Es ist Aufgabe der vorliegenden Erfindung, die Wartung einer gattungsgemäßen Vorrichtung zu verbessern.

Die Aufgabe wird gelöst durch einen Gegenstand gemäß Anspruch 1. Vorteilhafte Ausgestaltungen der Erfindung sind den auf diesen Anspruch rückbezogenen Unteransprüchen sowie der nachfolgenden Beschreibung zu entnehmen. Die Aufgabe wird ebenfalls gelöst durch eine Legemaschine gemäß Anspruch 14, welche eine erfindungsgemäße Streuvorrichtung aufweist.

Eine erfindungsgemäße Streuvorrichtung zeichnet sich dadurch aus, dass die insbesondere unterhalb der Rührwelle der zumindest einen Abgabeeinheit angeordnete wenigstens eine Dosierwelle durch wenigstens einen nach Lösen wenigstens einer Feststellvorrichtung beweglichen und insbesondere abnehmbaren Gehäuseteil des Dosiergehäuses gelagert ist.

Durch Lösen der manuell und insbesondere ohne Werkzeug betätigbaren Feststellvorrichtung ist das Gehäuse der Dosiervorrichtung auf einfache Weise öffnungsfähig ausgebildet. Durch das Öffnen des Gehäuses und das hiermit einhergehende Bewegen des von dem anderen oder weiteren Gehäuseteil entfernbaren Gehäuseteils werden beide Lager der Dosierwelle geöffnet, so dass die Dosierwelle aus den jeweiligen Lagern heraus entnehmbar ist.

Während das Gehäuse vorzugsweise im Wesentlichen dergestalt zweiteilig aufgebaut ist, dass die Dosierwelle von zwei Gehäuseteilen gelagert ist, kann eine solche Lagerung auch die drei Gehäuseteile erfolgen, wobei beispielsweise ein oberer oder hinterer Gehäuseteil fest angeordnet ist und zwei weitere untere oder vordere Gehäuseteile durch jeweilige Feststellvorrichtungen lösbar mit dem fest angeordneten Gehäuseteil sowie miteinander verbunden sind.

Sofern nachfolgend nur die Ausbildung einer Abgabeeinheit beschrieben wird, sind in der Regel auch identische Ausbildungen mehrerer Abgabeeinheiten derselben Streuvorrichtung gemeint. So weisen mehreren Abgabeeinheiten jeweils ein eigenes Dosiergehäuse auf, in dem eine jeweils der Abgabeeinheit zugeordnete Dosierwelle angeordnet ist. Diese ist dann jeweils entsprechend der Erfindung in den voneinander entfernbaren Gehäuseteilen gelagert.

Die Trennung des Gehäuses verläuft durch beide Lager, so dass erfindungsgemäß beide Lager der Dosierwelle geteilt und die Lagerteile den jeweiligen Gehäuseteilen zuzuordnen sind. Es versteht sich, dass etwaige, ggf. entnehmbare Teile des Lagers in der Gehäusewand gehalten sein können. Auch liegt es im Rahmen der Erfindung, dass die Dosierwelle über Kugellager gelagert ist, die auf der Welle sitzen und die in dem Gehäuse, welches dann geteilte Lagersitze ausbildet, gelagert sind. Wesentlich ist, dass durch Lösen einer händisch zu betätigenden Feststellvorrichtung die Welle einfach aus dem Gehäuse genommen werden kann.

Besonders vorteilhaft ist jedoch eine Ausbildung, bei der die Dosierwelle zumindest einseitig, vorzugsweise beidseitig, direkt in und an der Gehäusewand gelagert ist, die Lager der Dosierwelle geteilt und einem jeweiligen Gehäuseteil zugeordnet sind. Durch ein Öffnen, beispielsweise ein Aufklappen des Gehäuses, ist die Dosierwelle dann einfach zugänglich und direkt entnehmbar. Insbesondere sind die Lager der Dosierwelle hälftig geteilt, so dass in einer Seitenansicht in Richtung der Dosierwellenachse durch ein vorzugsweise oberes und ein unteres Gehäuseteil jeweils Halblagerschalen ausgebildet werden.

Die Dosierwelle ist vorzugsweise als Schneckenwelle ausgebildet und aus Stahl gefertigt. Durch die Lagerung der Welle in dem Gehäuse und die Öffnungsfähigkeit des Gehäuses ist nicht nur die Dosierwelle entnehmbar sondern auch das Gehäuse selbst entsprechend einfach wartungsfähig. Der zumindest eine bewegliche Gehäuseteil kann von dem anderen Gehäuseteil entweder komplett abgenommen werden oder ist über zumindest ein Scharnier gelenkig an diesem angebunden.

Die Rührwelle, die vorzugsweise als Vorgelegewelle der Dosierwelle ausgebildet ist, ist gemäß einer weiteren vorteilhaften Ausgestaltung der Erfindung über eine mit insbesondere wechselbaren Zahnrädern versehene formschlüssige Übersetzungsstufe mit der Dosierwelle verbunden. Durch die Möglichkeit der Entfernung der Dosierwelle aus ihrem jeweiligen Lager können ein dosierwellenseitiges und ein rührwellenseitiges Zahnrad aus ihrer formschlüssigen Verbindung gebracht werden, wobei die Entnahmerichtung zwecks einfacher Entnahme der Dosierwelle aus dem Gehäuse auf einer Linie mit einer Geraden liegen sollte, die in einer Seitenansicht die Drehachsen der Vorgelege- bzw. Rührwelle und der Dosierwelle schneidet.

Die Zahnräder sind lösbar auf der jeweiligen Welle angebracht, so dass die Übersetzung der Übersetzungsstufe geändert werden kann.

Dosierwelle und Vorgelegewelle sind mit ihren Achsen insbesondere quer zur Fahrtrichtung der Streuvorrichtung bzw. einer zugehörigen Maschine ausgebildet. Durch die lediglich formschlüssige Verbindung von Dosier- und Vorgelegewelle mittels der Übersetzungsstufe kann die Dosierwelle auf einfache Weise entnommen werden.

Vorteilhafterweise ist eine Auffangvorrichtung vorgesehen, die zur Aufnahme der nach einem Öffnen des Gehäuseteils ansonsten freien Dosierwelle ausgebildet ist. Diese Auffangvorrichtung der Streuvorrichtung kann beispielsweise durch hakenförmige Wellenaufnahmen seitlich der Lager bzw. des Gehäuses ausgebildet werden, wobei die Haken vorzugsweise etwas unterhalb zumindest des oberen Gehäuseteils angeordnet sind und einer Beweglichkeit des unteren Gehäuseteils nicht im Weg stehen.

Als freiliegende bzw. freie Dosierwelle wird eine Dosierwelle verstanden, die nicht mehr durch das Gehäuse bzw. in diesem gelagert und gehalten ist. Die Auffangvorrichtung dient somit als Sicherungsvorrichtung, damit eine einfache Entnahme der Dosierwelle erfolgen kann.

Gemäß einer weiteren vorteilhaften Ausführung der Erfindung bildet das Dosiergehäuse wenigstens einen Kanal aus, dessen Boden ausgehend von einem Einlauf hin zu einer Abgabeöffnung, die den Abgabebereich ausbildet, zumindest abschnittsweise ansteigt. **In** diesem Kanal wird von einem, beispielsweise zentralen, Einlauf her das auszugebende Gut in Richtung der zumindest einen Abgabeöffnung geleitet, wobei das Gut, welches sich zumindest am Boden des Kanals befindet, gegen die Schwerkraft hochgefördert wird. Hierdurch wird verhindert, dass das nach einem Ausschalten der Antriebseinheit noch im Kanal bzw. im Dosiergehäuse befindliche Gut aus diesem herausfällt und beispielsweise bereits gedüngte Bereiche überdüngt werden oder nicht zu düngende Bereich gedüngt werden. Als Kanal bzw. Förderkanal wird hierbei derjenige Hohlbereich des Dosiergehäuses bezeichnet, in dem das Gut in Richtung der Abgabeöffnung gefördert wird.

Das in dem Dosiergehäuse befindliche Dosierelement in Form beispielsweise der Förderschnecke muss nicht in diesem gesamten Kanal angeordnet sein. Beispielsweise kann der Bereich, in dem das Dosierelement angeordnet ist, an seinem Ende einen Abzweig aufweisen, der über ein kurzes und ohne eine Dosierschnecke ausgestattetes Kanalstück hin zu einer den Abgabebereich ausbildenden Abgabeöffnung führt. Insbesondere ist der zu dieser Abgabeöffnung hinführende Boden des Kanals ansteigend ausgebildet und die Abgabeöffnung an ihrem untersten Ende ist höher als der Boden des mit dem Dosierelement versehenen Förderkanals.

Vorzugsweise bildet die zumindest eine Abgabeöffnung eine Fläche aus, die mit einer zum Untergrund angewinkelten Flächennormalen versehen ist, d.h. die Fläche der Abgabeöffnung steht nicht senkrecht auf einer Horizontalen parallel zum Boden, sondern ist dieser gegenüber angewinkelt. Etwaige Schläuche oder andere Weiterleitungsmittel, die das Gut in Richtung Boden leiten, sind mit ihrer Längsmittelachse ebenfalls leicht ansteigend an diese Öffnung anbringbar. Nach einem etwaigen schwerkraftbedingten Durchtritt durch die Abgabeöffnung verbleibt das auszugebende Gut dann noch im noch ansteigenden Weiterleitungsmittel.

Für die Erfindung wird der Untergrund unterhalb der erfindungsgemäßen Vorrichtung als horizontal angesehen. Die Abgabeöffnung wird durch den die Öffnung begrenzenden Rand ausgebildet. Dieser ist insbesondere kreisförmig ausgebildet zwecks einfacher Anschlussmöglichkeiten für das auszugebende Gut weiterleitende Schläuche.

Vorzugsweise bildet der bewegliche Gehäuseteil des Dosiergehäuse eine Hälfte der Abgabeöffnung aus, d.h. auch die Abgabeöffnung wird genauso wie die Lager geteilt. Somit werden die Integrität sowohl des feststehenden Gehäuseteils wie auch des von diesem wegzubewegenden, öffnungsfähigen bzw. beweglichen Gehäuseteils beeinträchtigende Strukturen und Bereiche in die Kräfte eingeleitet werden auf beide Gehäuseteile aufgeteilt, um eine hohe Stabilität zu erreichen. Insbesondere ist der untere Teil des Gehäuses abnehmbar, wobei eine Trennkante zwischen den beiden Gehäuseteilen nicht parallel zum Boden verläuft, sondern zur Vereinfachung der Wartung oder der Entnahme zumindest abschnittsweise angewinkelt zum Untergrund liegt. Ebenfalls kann es sich um eine in einer Seitenansicht angewinkelte Gerade handeln, die zunächst etwaige Lager hälftig schneidet und dann zu einer Abgabeöffnung hin und diese zerschneidend ansteigt.

Die Dosierwelle ist insbesondere als Schneckenwelle ausgebildet, die eine zentrale Seele aufweist oder die ohne eine zentrale Seele und nur mit endseitigen Wellenstummeln, auf denen die Schneckenwelle gelagert ist, ausgebildet ist. Vorteilhafterweise ist die Dosierwelle mit einer links- und einer rechtsgängigen Schneckenwendel ausgebildet, die zu förderndes Gut ausgehend von einem zentralen Einlauf hin zu zwei Abgabebereichen der Abgabeeinheit fördern. **In** einer etwaigen Kombination mit einem ansteigenden Boden steigt dieser ausgehend von einem zentralen Einlauf hin zu den beiden Abgabebereichen zumindest abschnittsweise an. Insbesondere steigt der Boden an, wenn die Abgabeöffnungen jeweils in einem Kanalabzweig angeordnet sind, der quer auf den die Dosierelemente oder das Dosierelement aufweisenden Hauptkanal stößt.

Gemäß einer weiteren Ausbildung der Erfindung ist eine der als Schneckenwellen ausgebildeten Dosierwellen mit einer linksgängigen Schneckenwendel und die weitere mit einer rechtsgängigen Schneckenwendel ausgebildet, so dass insgesamt zwei Dosierwellen in einem Dosiergehäuse angeordnet sind, wobei die zur Förderung des Gutes ausgehend von einem zentralen Einlauf hin zu zwei Abgabebereichen ausgebildet sind.

Das Dosiergehäuse der Abgabeeinheit ist vorzugsweise mit seinem zumindest einen weiteren Gehäuseteil an einem mit zwei Lagerblechen versehenen Rahmen angeordnet, an dem oder in dem auch die Rührwelle gelagert ist. Hierdurch werden die in der Abgabeeinheit entstehenden Kräfte gut abgefangen und die ganze Vorrichtung kann kompakt bauen.

Insbesondere ist die Feststellvorrichtung durch zumindest einen insbesondere zentral zwischen den Lagern befindlichen Schraub-, Schnapp-, Steck- und/oder Exzenterverschluss ausgebildet. So lassen sich ohne Hilfsmittel die entsprechenden Gehäuseteile manuell voneinander entfernen, was der Wartbarkeit zu Gute kommt.

Vorzugsweise ist der bewegliche Gehäuseteil des Dosiergehäuses in der Verschlussposition mit einem oder mehreren Fortsetzen in Aufnahmen des weiteren Dosiergehäuses gelagert. Diese Lagerung erfolgt insbesondere auf der der Feststellvorrichtung gegenüberliegenden Seite, so dass sich die Fortsätze in den Aufnahmen verspannen können, wenn die Feststellvorrichtung die Gehäuseteile aneinander befestigt. Sofern es sich bei den Fortsätzen und den Aufnahmen nicht um eine scharnierartige Ausbildung handelt, sondern um eine ohne weiteres lösbare Steckverbindung, kann die lösbare Gehäusehälfte einfach von der anderen Gehäusehälfte bzw. dem Gehäuseteil entfernt werden.

**In** einer Ausbildung, in der in dem Rahmen eine Ausnehmung angeordnet ist, die mit einer Zuführöffnung des Dosiergehäuses und einer unteren Abgabeöffnung des Vorratsbehälters fluchtet, ist eine besonders stabile und kompakte Vorrichtung möglich. Das Gehäuseteil, welches am Rahmen befestigt ist, ist nicht nur an seinen Endbereichen, sondern auch entlang des Bereiches zwischen den beiden Lagern am Rahmen befestigt, so dass es auch bei über diese Breite verteilten Aufnahmen entsprechend sicher festgelegt ist.

Die erfindungsgemäßen Vorteile der Streuvorrichtung kommen auch einer Legemaschine für Hackfrüchte zugute, die eine vor- oder nachbeschriebene Streuvorrichtung aufweist und welche die eingangs gestellte Aufgabe ebenfalls löst.

Vorzugsweise werden diese Dosierwellen jeweils über eine Rührwelle angetrieben, auf die eine entsprechende Antriebseinheit einwirkt, so dass eine antriebsmäßige Verbindung zwischen der Antriebseinheit und der Dosierwelle über die Übersetzungsstufe ausgebildet wird. Es versteht sich, dass die Dosierwelle wie auch bei den anderen Ausführungsbeispielen nicht durch den Vorratsbehälter verläuft.

Weitere Vorteile und Einzelheiten der Erfindung sind der nachfolgenden Figurenbeschreibung zu entnehmen. Schematisch dargestellt zeigt:
- Fig. 1: einen erfindungsgemäßen Gegenstand,
- Fig. 2: einen Teil des Gegenstands nach Fig. 1,
- Fig. 3: einen Teil des Gegenstands nach der Fig. 2,
- Fig. 4: den Gegenstand nach Fig. 3 in einer teilweise geschnittenen Darstellung,
- Fig. 5: einen Teil des Gegenstands nach Fig. 2,
- Fig. 6: den Gegenstand nach Fig. 3 in einer Seitenansicht.

Einzelne technische Merkmale der nachfolgend beschriebenen Ausführungsbeispiele können auch in Kombination mit den Merkmalen des unabhängigen Anspruchs zu erfindungsgemäßen Weiterbildungen führen. Sofern sinnvoll sind funktional gleichwirkende Teile mit identischen Bezugsziffern versehen.

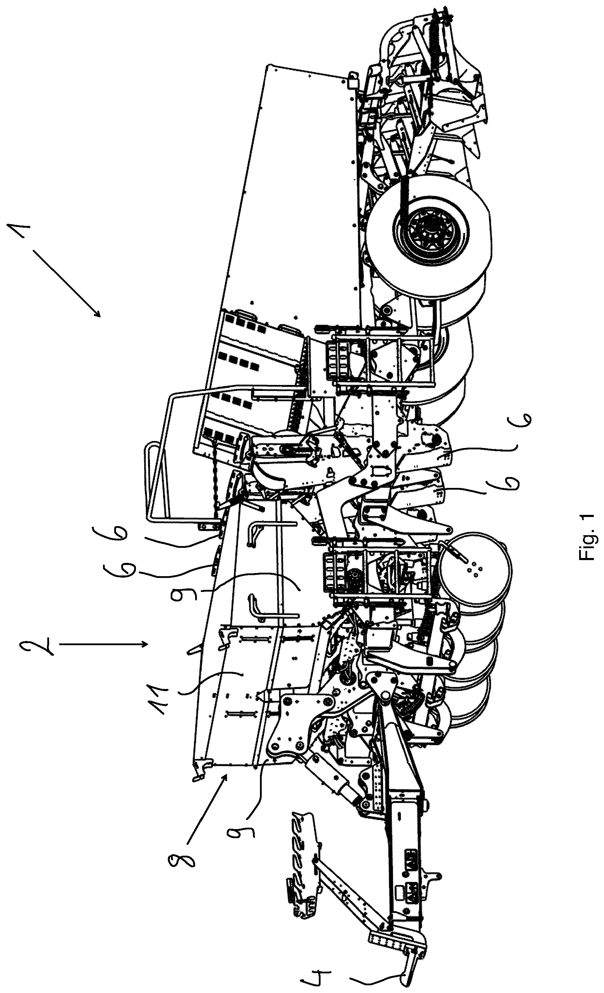

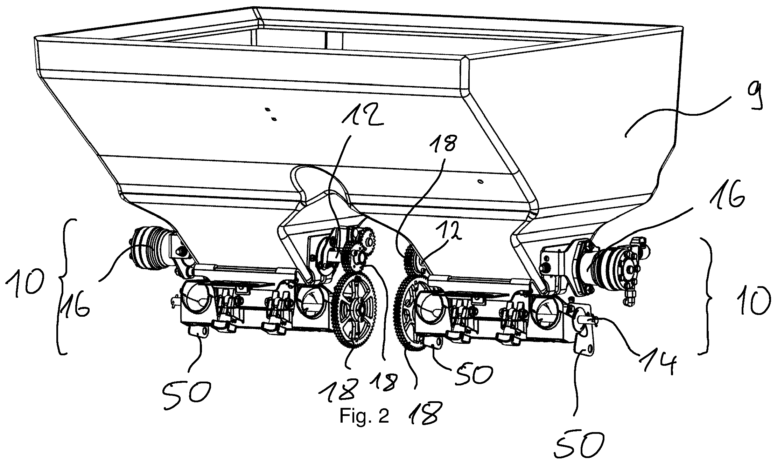

Eine erfindungsgemäße Legemaschine 1 gemäß Fig. 1 umfasst eine erfindungsgemäße Streuvorrichtung 2, die in dem Ausführungsbeispiel der Fig. 1 zwischen einem Kupplungsmittel 4 und einem Legevorrichtungen 6 aufweisenden Mittelteil der Legemaschine 1 angeordnet ist. Die landwirtschaftliche und erfindungsgemäße Streuvorrichtung 2 weist einen Vorratsbehälter 8 für das auszubringende Gut auf, typischerweise granularer Dünger, sowie vorliegend zwei Abgabeeinheiten 10, die jeweils eine zumindest teilweise durch einen unteren Bereich eines Vorratsbehälterteil 9 laufende Rührwelle 12 und jeweils eine in einem Dosiergehäuse angeordnete Dosierwelle 14 umfassen. Mittels der Dosierwelle 14 ist das Gut in Richtung eines Abgabebereiches der Abgabeeinheit förderbar. Der Vorratsbehälter 8 nach Fig. 1 ist mehrteilig aufgebaut und umfasst zwei der in Fig. 2 dargestellten Vorratsbehälterteile 9, die mit einem Aufsatz 11 einen gemeinsamen Vorratsraum ausbilden.

Die Rührwellen der beiden Abgabeeinheiten 10 werden von einer Antriebseinheit 16 einer Antriebsvorrichtung angetrieben. Der Antrieb der Dosierwellen 14 erfolgt mittelbar, und zwar über die koaxial zur jeweiligen Motordrehwelle der Antriebseinheit 16 angeordneten Rührwelle 12, die mittels einer Zahnräder 18 aufweisenden Übersetzungsstufe die Antriebskraft auf die Dosierwelle 14 überträgt.

Die Abgabeeinheit ist als kompakt bauendes Teil mit einer durch die unteren Bereiche des Vorratsbehälters 8 verlaufenden Rührwelle 12 und ansonsten im Wesentlichen unterhalb des Vorratsbehälters 8 angeordnet. Auch die Antriebseinheiten 16 der Antriebsvorrichtungen sind zumindest teilweise unterhalb der oberhalb weiter auskragenden seitlichen Vorratsbehälterwände befindlich.

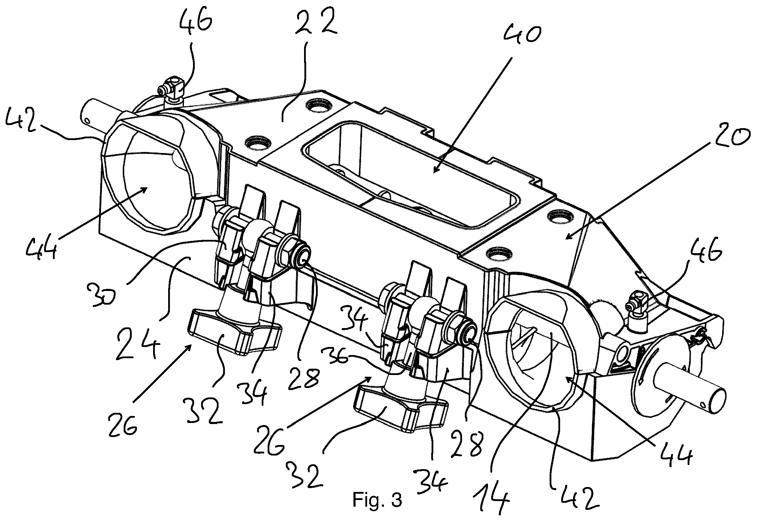

Die Dosierwelle 14 ist unterhalb der Rührwelle 12 angeordnet und in einem Dosiergehäuse 20 gelagert. Ein oberer Gehäuseteil 22 und ein unterer Gehäuseteil 24 sind mittels einer Feststellvorrichtung fest miteinander verbunden. Die Feststellvorrichtung weist zwei Schraubverschlüsse 26 auf. Diese sind jeweils einenends mit einem Bolzen 28 in jeweils hakenförmigen Bolzenaufnahmen 30 verschwenkbar angeordnet. Die Bolzenaufnahmen 30 sind in der Fig. 3 nach oben hin offen, so dass der Bolzen entnommen werden kann. Der Griffteil 32 ist am unteren Gehäuseteil 24 verschraubbar gegen Gegenlagerelemente 34, die in der geschlossenen Position gegen die Bolzenaufnahmen 30 geklemmt sind.

Eine Augenschraube 36 ist direkt am Bolzen 28 befestigt.

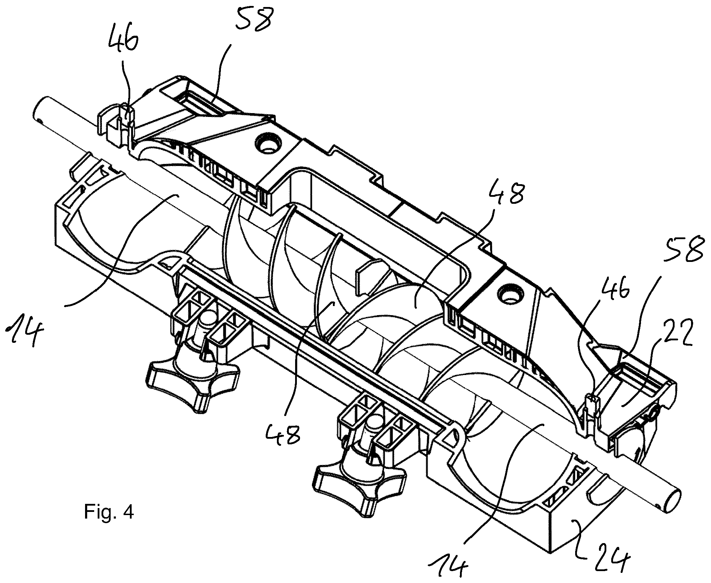

Ausgehend von einem bei diesem Ausführungsbeispiel zentral angeordneten Einlauf 40, der mit einer Abgabeöffnung des Vorratsbehälters 8 korrespondiert, wird das (Streu-)Gut mittels der Dosierwelle 14 hin zu zwei durch Gehäuseränder 42 begrenzte Abgabeöffnungen 44 gefördert. Die Abgabeöffnungen stellen die Abgabebereiche der Abgabeeinheit dar. Die Dosierwelle 14 ist in den seitlichen Wandbereichen des Gehäuses 20 gelagert, wobei die Lager über Schmierstutzen 46 geschmiert werden können (vergl. Fig. 4).

Die aus Stahl hergestellte Dosierwelle 14 ist unmittelbar in den oberen und unteren Gehäuseteilen 22, 24 gelagert. Optional können Kugellager in der Gehäusewand gehalten werden. Die Konstruktion ist somit einfach aufgebaut und einfach herstellbar. Insbesondere ist das Dosiergehäuse 20 als Spritzgussbauteil hergestellt.

Die Dosierwelle 14 weist eine links- und eine rechtsgängige Schneckenwendel 48 auf, so dass ausgehend von dem zentralen Einlauf her die spiegelsymmetrisch zu einer Mittelebene des Dosiergehäuses, die senkrecht die Drehachse schneidet, gleiche Mengen an zu streuendem Gut zu den Abgabeöffnungen bzw. Ausgabeöffnungen 44 gefördert werden.

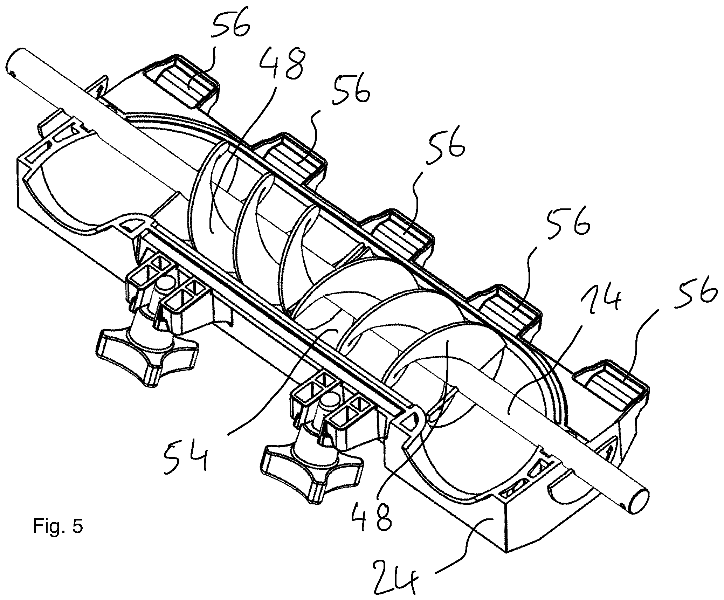

Durch das Lösen der in Fig. 5 noch in der Geschlossenposition gezeigten Schraubverschlüsse 26 und dem Verschwenken der Griffteile 32 um die Drehachse der Bolzen 28 kann der untere Gehäuseteil 24 (vergl. Fig. 5) nach unten aufklappen, so dass die Dosierwelle 14 frei entnommen werden kann. Es versteht sich, dass die Lagerhälften der Dosierwelle 14, die durch die jeweiligen Gehäuseteile ausgebildet werden, vorzugsweise genau hälftig geteilt sind. Eine geringe Flexibilität der Gehäusewandung vorausgesetzt, kann auch eine nicht genau hälftige Teilung verwendet werden, so dass die Dosierwelle 14 in einer der beiden Gehäusehälften bzw. Gehäuseteile 22,24 noch geringfügig verrastet und gegen einen Widerstand aus der Lagerhälfte herausgenommen werden muss. Ebenfalls liegt es im Rahmen der Erfindung, wenn eine nicht genau hälftige Teilung oder das Lager in mehr als zwei Teile geteilt ist, so dass beim Lösen der Gehäuseteile voneinander die Dosierwelle freigegeben wird.

Die beiden Lager einer jeweiligen Dosierwelle 14 sind geteilt und die entsprechenden Teile einem jeweiligen Gehäuseteil 22 bzw. 24 zugeordnet.

Seitlich der jeweiligen Dosiergehäuse 20 weist eine jeweilige Abgabeeinheit 10 hakenförmige Wellenaufnahmen 50 einer Auffangvorrichtung auf, die bei einem Öffnen des unteren Gehäuseteils 24 die Dosierwelle 14 auffangen. Da die Zahnräder 18 der zugehörigen Übersetzungsstufe lediglich formschlüssig miteinander verbunden sind und durch ein Öffnen des unteren Gehäuseteils 24 die Dosierwelle nach unten entnommen wird, gelangen das untere Zahnrad 18 der Dosierwelle 14 und das obere Zahnrad 18 der Rührwelle 12 außer Eingriff. Die Bewegungsrichtung der Dosierwelle 14 ist in einer Seitenansicht auf einer Linie mit der durch die Drehachsen der Rührwelle 12 und der Dosierwelle 14 verlaufenden Längsachse.

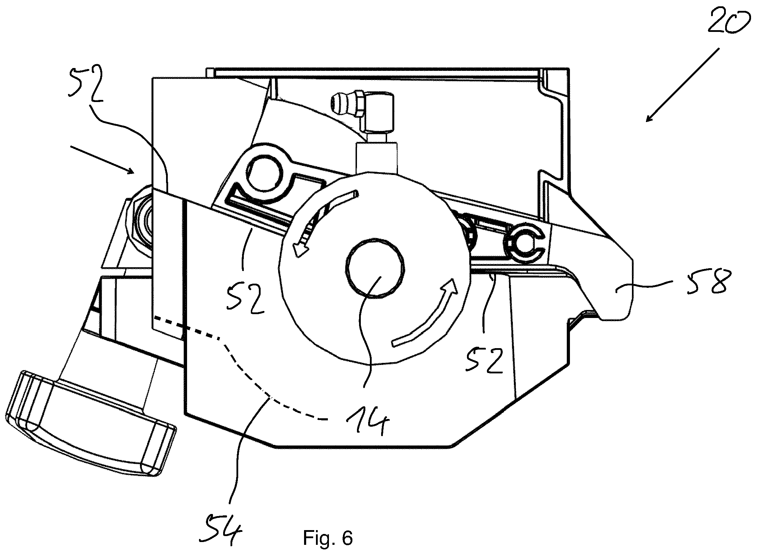

Das Dosiergehäuse 20 bildet wenigstens einen Kanal aus, dessen Boden ausgehend von einem Einlauf 40 hin zu den Abgabeöffnungen 44 zumindest abschnittsweise ansteigt. Während in dem Bereich der Schneckenwendeln 48 (vergl. Fig. 4) ein Boden 54 in Förderrichtung geradlinig verläuft, steigt er im zur Abgabeöffnung 44 verlaufenden Endbereich des Ausgabekanals gemäß der gestrichelten Linie in Fig. 6 hin an, wobei der Boden 54 abschließend in etwa parallel zur Trennkante 52 im Bereich der Abgabeöffnung 44 verläuft.

Mehrere Fortsätze 56 des unteren Gehäuseteils 24 stützen sich auf ein Widerlager ausbildenden Aufnahmen 58 des oberen Gehäuseteils 22 ab, aus denen sie nach Öffnen der Schraubverschlüsse entnommen werden können, so dass die untere Gehäusehälfte 24 komplett frei entfernt werden kann (Fig. 5 und 6).

Vorzugsweise verläuft eine Trennkante 52 des Dosiergehäuses 20 ausgehend von den Aufnahmen 58 hin zur Abgabeöffnung 44 dergestalt, dass die untere Gehäusehälfte bezogen auf einen um die Drehachse der Dosierwelle 14 herumgezogenen Kreis mehr als 180° einnimmt (Fig. 6). Hierbei wird sowohl die hälftige Lagerung der Dosierwelle realisiert, als auch eine jeweils hälftige Ausbildung der Abgabeöffnung 44 erreicht.

## Patentansprüche

1. Landwirtschaftliche Streuvorrichtung für Dünger oder anderes in oder auf einen zu bearbeitenden Untergrund zu überführendes Gut, umfassend wenigstens einen Vorratsbehälter (8) für das Gut sowie eine Abgabeeinheit (10), die eine zumindest teilweise durch den Vorratsbehälter (8) verlaufende Rührwelle (12) und wenigstens eine in einem Dosiergehäuse (20) angeordnete Dosierwelle (14) umfasst, mittels der das Gut in Richtung eines Abgabebereiches der Abgabeeinheit (10) förderbar ist, wobei eine eine Antriebseinheit (16) aufweisende Antriebsvorrichtung der Abgabeeinheit (10) zum Antrieb der Dosierwelle (14) insbesondere über die Rührwelle (12) ausgebildet ist,
wobei
die insbesondere unterhalb der Rührwelle (12) der zumindest einen Abgabeeinheit (10) angeordnete wenigstens eine Dosierwelle (14) durch wenigstens einen nach Lösen wenigstens einer Feststellvorrichtung beweglichen und insbesondere abnehmbaren Gehäuseteil (24) des Dosiergehäuses (20) gelagert ist, **dadurch gekennzeichnet, dass** die Lager der Dosierwelle (14) dergestalt jeweils geteilt und einem jeweiligen Gehäuseteil (22,24) zugeordnet sind, dass durch das Öffnen des Gehäuses beide Lager geöffnet werden.

2. Streuvorrichtung nach einem der vorherigen Ansprüche, **dadurch gekennzeichnet, dass** die Rührwelle (12) abtriebsseitig über eine mit insbesondere wechselbaren Zahnrädern (18) versehene formschlüssige Übersetzungsstufe mit der Dosierwelle (14) verbunden ist.

3. Streuvorrichtung nach einem der vorherigen Ansprüche, **gekennzeichnet durch** eine Auffangvorrichtung, die zur Aufnahme der nach einem Öffnen des Gehäuseteils (24) ansonsten freien Dosierwelle (14) ausgebildet ist.

4. Streuvorrichtung nach einem der vorherigen Ansprüche, **dadurch gekennzeichnet, dass** das Dosiergehäuse (20) wenigstens einen Kanal ausbildet, dessen Boden (54) ausgehend von einem Einlauf hin zu einer den Abgabebereich ausbildenden Abgabeöffnung (44) zumindest abschnittsweise ansteigt.

5. Streuvorrichtung nach Anspruch 4, **dadurch gekennzeichnet, dass** die zumindest eine Abgabeöffnung (44) eine Fläche mit einer zum Untergrund angewinkelten Flächennormalen ausbildet.

6. Streuvorrichtung nach einem der vorherigen Ansprüche 4 oder 5, **dadurch gekennzeichnet, dass** der bewegliche Gehäuseteil (24) des Dosiergehäuses (20) eine Hälfte der Abgabeöffnung (44) ausbildet.

7. Streuvorrichtung nach einem der vorherigen Ansprüche, **dadurch gekennzeichnet, dass** die Dosierwelle (14) als Schneckenwelle ausgebildet ist.

8. Streuvorrichtung nach Anspruch 7, **dadurch gekennzeichnet, dass** die Dosierwelle (14) mit einer links- und einer rechtsgängigen Schneckenwendel (48) ausgebildet ist, die zur Förderung des Gutes ausgehend von einem zentralen Einlauf hin zu zwei Abgabebereichen der Abgabeeinheit (10) ausgebildet sind.

9. Streuvorrichtung nach einem der vorherigen Ansprüche 1 bis 7 mit zwei Dosierwellen (14), **dadurch gekennzeichnet, dass** eine der als Schneckenwellen ausgebildeten Dosierwellen (14) mit einer linksgängigen Schneckenwendel und die weitere mit einer rechtsgängigen Schneckenwendel ausgebildet ist, die zur Förderung des Gutes ausgehend von einem zentralen Einlauf hin zu zwei Abgabebereichen ausgebildet sind.

10. Streuvorrichtung nach einem der vorherigen Ansprüche, **dadurch gekennzeichnet, dass** das Dosiergehäuse (20) der Abgabeeinheit (10) mit seinem zumindest einen weiteren Gehäuseteil (22) an einem mit zwei Lagerblechen versehenen Rahmen angeordnet ist, in dem die Rührwelle (12) gelagert ist.

11. Streuvorrichtung nach einem der vorherigen Ansprüche, **dadurch gekennzeichnet, dass** die Feststellvorrichtung durch zumindest einen insbesondere zentral zwischen den Lagern befindlichen Schraub-, Exzenter-, Steck- oder Schnappverschluss (26) ausgebildet ist.

12. Streuvorrichtung nach einem der vorherigen Ansprüche, **dadurch gekennzeichnet, dass** der bewegliche Gehäuseteil (24) in der Verschlossenposition mit einem oder mehreren Fortsätzen (56) in Aufnahmen (58) des weiteren Dosiergehäuses (20) gelagert ist.

13. Streuvorrichtung nach einem der vorherigen Ansprüche, **dadurch gekennzeichnet, dass** in dem Rahmen eine Ausnehmung angeordnet ist, die mit einer Zufuhröffnung des Dosiergehäuses (20) und einer unteren Abgabeöffnung des Vorratsbehälters (8) fluchtet.

14. Legemaschine für Hackfrüchte umfassend eine Streuvorrichtung (2) nach einem der vorherigen Ansprüche.

## Claims

1. Agricultural spreading device for fertilizer or other material to be transferred into or on a ground to be treated, comprising at least a storage container (8) for the material and a discharge unit (10) which comprises an agitator shaft (12) extending at least partially through the storage container (8) and at least one metering shaft (14) arranged in a metering housing (20), via which the material can be conveyed towards a discharge area of the discharge unit (10), wherein a drive device of the discharge unit (10), which drive device comprises a drive unit (16), is designed to drive the metering shaft (14), in particular via the agitator shaft (12), whereas the at least one metering shaft (14) arranged in particular below the agitator shaft (12) of the at least one discharge unit (10) is mounted by at least one housing part (24) of the metering housing (20), which housing part, after the release of at least one locking device, is movable and in particular removable, **characterized in that** the bearings of the metering shaft (14) are each divided in this manner and assigned to a respective housing part (22, 24), in such a way that opening the housing exposes both bearings.

2. The spreading device according to one of the preceding claims, **characterized in that** the agitator shaft (12) is connected on the output side to the metering shaft (14) via a form-fitting transmission stage provided in particular with exchangeable gear wheels (18).

3. The spreading device according to one of the preceding claims, **characterized by** a retaining device which is designed to receive the metering shaft (14), which would otherwise be unsupported upon opening of the housing part (24).

4. The spreading device according to one of the preceding claims, **characterized in that** the metering housing (20) forms at least one channel, the bottom (54) of which rises at least in sections starting from an inlet towards a discharge opening (44) forming the discharge area.

5. The spreading device according to claim 4, **characterized in that** the at least one discharge opening (44) forms a surface with a surface normal arranged at an angle to the ground.

6. The spreading device according to one of the preceding claims 4 or 5, **characterized in that** the movable housing part (24) of the metering housing (20) forms one half of the discharge opening (44).

7. The spreading device according to one of the preceding claims, **characterized in that** the metering shaft (14) is designed as a worm shaft.

8. The spreading device according to claim 7, **characterized in that** the metering shaft (14) is designed with a left-hand and a right-hand worm helix (48), which are designed to convey the material from a central inlet towards two discharge areas of the discharge unit (10).

9. The spreading device according to one of the preceding claims 1 to 7 with two metering shafts (14), **characterized in that** one of the metering shafts (14) designed as worm shafts is designed with a left-hand worm helix and the other with a right-hand worm helix, which are designed to convey the material from a central inlet towards two discharge areas.

10. The spreading device according to one of the preceding claims, **characterized in that** the metering housing (20) of the discharge unit (10) is arranged with its at least one further housing part (22) on a frame which is provided with two bearing plates and in which the agitator shaft (12) is mounted.

11. The spreading device according to one of the preceding claims, **characterized in that** the locking device is formed by at least one screw, eccentric, plug-in or snap-in lock (26) located in particular centrally between the bearings.

12. The spreading device according to one of the preceding claims, **characterized in that** the movable housing part (24) is mounted in the closed position with one or more extensions (56) in receptacles (58) of the remaining metering housing (20).

13. The spreading device according to one of the preceding claims, **characterized in that** a recess is arranged in the frame which recess is aligned with a feed opening of the metering housing (20) and a lower discharge opening of the storage container (8).

14. Planting machine for root crops comprising a spreading device (2) according to one of the preceding claims.

## Revendications

1. Dispositif d'épandage agricole pour engrais ou autre produit à transférer dans ou sur un sol à travailler, comprenant au moins un réservoir (8) pour le produit ainsi qu'une unité de distribution (10), qui comprend un arbre d'agitation (12) s'étendant au moins partiellement à travers le réservoir (8) et au moins un arbre de dosage (14) agencé dans un boîtier de dosage (20), au moyen duquel arbre de dosage le produit peut être transporté en direction d'une zone de distribution de l'unité de distribution (10), un dispositif d'entraînement, présentant une unité d'entraînement (16), de l'unité de distribution (10) étant réalisé pour l'entraînement de l'arbre de dosage (14) en particulier par l'intermédiaire de l'arbre d'agitation (12),
dans lequel
ledit au moins un arbre de dosage (14) agencé en particulier sous l'arbre d'agitation (12) de ladite au moins une unité de distribution (10) est logé à travers au moins une partie (24) de boîtier, mobile et en particulier amovible après le desserrage d'au moins un dispositif de blocage, du boîtier de dosage (20), **caractérisé en ce que** les paliers de l'arbre de dosage (14) sont à chaque fois divisés et associés à une partie (22, 24) de boîtier respective de telle manière que les deux paliers sont ouverts par l'ouverture du boîtier.

2. Dispositif d'épandage selon l'une des revendications précédentes, **caractérisé en ce que** l'arbre d'agitation (12) est relié côté sortie à l'arbre de dosage (14) par l'intermédiaire d'un étage de transmission à complémentarité de forme pourvu de roues dentées (18) pouvant en particulier être remplacées.

3. Dispositif d'épandage selon l'une des revendications précédentes, **caractérisé par** un dispositif de réception qui est réalisé pour recevoir l'arbre de dosage (14) par ailleurs libre après l'ouverture de la partie (24) de boîtier.

4. Dispositif d'épandage selon l'une des revendications précédentes, **caractérisé en ce que** le boîtier de dosage (20) forme au moins un canal, dont le fond (54) monte au moins par sections, partant d'une entrée vers une ouverture de distribution (44) formant la zone de distribution.

5. Dispositif d'épandage selon la revendication 4, **caractérisé en ce que** ladite au moins une ouverture de distribution (44) forme une surface dont la normale est inclinée par rapport au sol.

6. Dispositif d'épandage selon l'une des revendications précédentes 4 ou 5, **caractérisé en ce que** la partie (24) de boîtier mobile du boîtier de dosage (20) forme une moitié de l'ouverture de distribution (44).

7. Dispositif d'épandage selon l'une des revendications précédentes, **caractérisé en ce que** l'arbre de dosage (14) est réalisé sous forme d'une vis sans fin.

8. Dispositif d'épandage selon la revendication 7, **caractérisé en ce que** l'arbre de dosage (14) est réalisé avec un pas de vis (48) à gauche et un pas de vis à droite, qui sont réalisés pour le transport du produit partant d'une entrée centrale vers deux zones de distribution de l'unité de distribution (10).

9. Dispositif d'épandage selon l'une des revendications précédentes 1 à 7 présentant deux arbres de dosage (14), **caractérisé en ce que** l'un des arbres de dosage (14) réalisés sous forme de vis sans fin est réalisé avec un pas de vis à gauche et l'autre est réalisé avec un pas de vis à droite, qui sont réalisés pour le transport du produit partant d'une entrée centrale vers deux zones de distribution.

10. Dispositif d'épandage selon l'une des revendications précédentes, **caractérisé en ce que** le boîtier de dosage (20) de l'unité de distribution (10) est agencé avec son au moins une autre partie (22) de boîtier sur un cadre pourvu de deux tôles de logement, dans lequel cadre est logé l'arbre d'agitation (12).

11. Dispositif d'épandage selon l'une des revendications précédentes, **caractérisé en ce que** le dispositif de blocage est formé par au moins une fermeture à vis, excentrique, à enfichage ou à encliquetage (26) se trouvant en particulier au centre entre les paliers.

12. Dispositif d'épandage selon l'une des revendications précédentes, **caractérisé en ce que** la partie (24) de boîtier mobile est logée dans la position fermée à l'aide d'une ou de plusieurs saillies (56) dans des logements (58) de l'autre boîtier de dosage (20).

13. Dispositif d'épandage selon l'une des revendications précédentes, **caractérisé en ce qu'**un évidement est agencé dans le cadre, lequel évidement est affleurant avec une ouverture d'alimentation du boîtier de dosage (20) et avec une ouverture de distribution inférieure du réservoir (8).

14. Planteuse pour plantes sarclées comprenant un dispositif d'épandage (2) selon l'une des revendications précédentes.
